# EUROPEAN PATENT APPLICATION

(11) **EP 4 194 835 A1**
(43) Date of publication of application: **14.06.2023**
(21) Application number: 21212842.5
(22) Date of filing: 07.12.2021
(51) Int. Cl.: G01N 1/08, G01N 1/24, E02D 1/04, E01C 13/00

(54) **NON-DESTRUCTIVE METHOD FOR SAMPLING OF INFILL AND KIT FOR USE IN THE METHOD**

(71) Applicant: Re-Match Holding A/S, 7400 Herning (DK)
(72) Inventor: Damhus, Rasmus D., 7400 Herning (DK); Welling, Martin, 7400 Herning (DK)
(74) Representative: AWA Denmark A/S

(57) **Abstract**

The present invention relates to a method for sampling of infill from an artificial turf field as well as a kit for use in the method. The method is nondestructive of the field and allows for prognosing the composition of the infill of the entire field by obtaining samples from only at least three areas of the field.

## Description

### Technical Field

The present invention relates to a method for sampling of infill from an artificial turf field as well as a kit for use in the method. The method is non-destructive of the field and allows for prognosing the composition of the infill of the entire field by obtaining samples from only at least three areas of the field.

### Background Art

Synthetic turf has been used for many years as surfaces for football (soccer), baseball and American and Australian football fields. In recent years it has been used in other applications where an alternative to natural grass is desired. These applications include at least playgrounds, residential and commercial lawns and other landscaping, paths, paintball fields, tennis courts, putting greens, dog runs etc.

Typically, synthetic turf includes a grass-like fabric having a backing and a plurality of upstanding ribbons, also called face fibers, resembling grass. Many synthetic turf products also include an infill material dispersed among the upstanding ribbons, which may consist of sand, tire rubber crumb, or other particulates, either singularly or in combination with each other. The infill material simulates the soil in natural turf, acts as a ballast, and/or contributes to the physical properties of the turf, such as resiliency, that make the turf suitable for a particular use.

Synthetic turf has a limited life span, depending on the construction of the turf, the application for which it is used, weathering and how the turf is maintained. As an example, a typical synthetic turf for use as an athletic field may have a useful life of from about 8 to 15 years. A large amount of synthetic turf is currently being used in hundreds of athletic fields and in other applications. Disposing of the turf is very expensive due to the composition of materials ranging from recycled rubber, sand to plastic. Also, in recent years the need for reducing waste of plastic and rubber has increased and more and more field owners require recycling as an integrated part of disposing and replacing artificial turfs. This all to avoid sending the turf to landfills at a substantial cost monetary and environmentally. Thus, recycling and reusing all or portions of the synthetic turf has been an explored option over recent years.

However, synthetic turf differs in composition from other materials, such as carpets, and those differences in composition make conventional carpet recycling processes unsuitable for recycling synthetic turf.

Many synthetic turf products include components that are not found in carpet and that are incompatible with, or at least undesirable in, conventional carpet recycling methods. Most dominantly, conventional carpet does not include infill. Typical infill materials for synthetic turf installations include sand, tire rubber crumb, dirt and/or other particulates, either singularly or in combination with each other. Thus, recycling synthetic turf presents a unique problem not encountered in the recycling of carpet.

Separating infill from the remainder of the turf may require use of special equipment, and there may be environmental concerns associated with disposing of the separated infill. Once separated from the carpet, the infill needs to be separated in its components, such as rubber and sand, in order to be reused. Infill consisting of only sand and rubber constitutes a challenge, since the size/diameter of the sand and rubber vary both by nature but also depending on how it has been worn over its lifetime. It is crucial for the reuse of e.g. sand that it is entirely free from rubber and vice versa. Being able to separate the infill components to the highest possible purity in an efficient manner poses a real challenge in the art.

It is also desirable to provide processes that are flexible so that the composition of the turf and the infill may vary without compromising the feasibility of the recovery process. Efficient separation is key to an economically feasible circular use of the materials.

Therefore, the aim of the present invention is to provide a preparatory method for use in optimizing a subsequent large scale recycling process of the infill.

### Summary of the Invention

Thus, the invention provides a method for obtaining samples of infill from an artificial football field, said method comprising the following steps
i) placing a plate with at least one hole at a first position on an artificial football field;
ii) pressing the plate firmly towards the base of the field in order to seal the hole from the remaining part of the turf;
ii) vacuuming infill from the hole to retrieve infill from the area of the sealed position;
iv) emptying the vacuum receiving means, optionally including a filter of the vacuum, into a container and designate the container with the first position;
v) repeating the steps i) to iv) to obtain at least a second and third sample;
wherein the samples are obtained from at least three predetermined positions of the football field.

During preliminary tests samples were taken from a multitude of positions on the field. However, subsequent analyses of the infill samples showed that when obtaining samples from at least three positions a representative result of the infill composition of the entire field was obtained, which is at least as accurate as when taking more samples. In other words, obtaining 5, 10, 20, 30 or more samples did not affect the relative standard deviation of the sample composition compared to the actual complete field. Hence, while it is contemplated that more samples may be obtained, such as up to 10 or more it was found that the samples from three predefined positions were enough to provide a representative picture of the composition of the entire field. The term "football" as used herein is to be interpreted as meaning association football, or soccer.

Thus, the method provides a simple non-destructive manner in which the composition of the whole field can be predetermined in order to perform a subsequent separation of either the infill alone or the entire turf field including infill.

In an embodiment the hole within the plate is a square and suitably it has a dimension of larger than or equal to 5 by 5 cm, larger than or equal to 8 by 8 cm, larger than or equal to 10 by 10 cm, larger than or equal to 12 by 12 cm and larger than or equal to 15 by 15 cm. Preferred is 10 by 10 cm. This area will allow enough material to be obtained to be able to determine the composition of the whole field, when taken from at least three predetermined positions. Though larger amounts are possible it is not feasible to remove too large amounts of infill from the field which is in use. Thus, the dimension should be understood as the smallest dimension that will provide a good result.

Particularly accurate determination of the infill composition is possible, when the at least three samples are taken from the following positions:
i) position 1 is a position at or near the periphery of the centre circle along the longitudinal central line of the field,
ii) position 2 is a position in the right or left corner of the penalty area facing away from the goal, and
iii) position 3 is a position immediately at or near the exterior side of the back line of the field in the right or left side of the goal in a position that is in between the corner and the side of the penalty area.

Without the wish to bound by any theory it is believed that it is the typical movement pattern of the players on the field which results in the distribution of the different grain size of the sand and rubber or other infill material and the ratio between the different types of infill at a certain position is representative and provides an improved accuracy for the composition of the whole field.

It is understood that the order, 1, 2 or 3 is not important, it is simply a matter of denoting the sample.

In some embodiments the samples are taken in the same side of the field. Thus, when a sample in one position is taken on the left hand side, the next sample is also taken at the left side, or, wherein when a sample is taken at the right side, the next sample is also taken at the right side.

The invention also provides a kit for obtaining samples from an artificial turf "on site", said kit comprising
- a vacuum device, preferably a battery driven portable vacuum cleaner;
- a plate having a hole;
- at least three sample containers for infill and
- an instruction insert for obtaining samples.

In an embodiment of the invention, the insert of the kit indicates at least three positions for obtaining infill samples, wherein the at least three positions are the following: i) a position at or near the periphery of the centre circle along the longitudinal central line of the field, ii) a position in the right or left corner of the penalty area facing a way from the goal and iii) a position immediately at or near the exterior side of the back line of the field in the right or left side of the goal in a position that is in between the corner and the side of the penalty area.

In an embodiment the squared hole of the plate has a dimension of 10 by 10 cm. Other dimensions are also contemplated as is detailed above in relation to the method.

The samples are used in a method of pre-analysing to determine the size distribution of the components in in each sample.

Preferably the pre-analysis is performed by the steps of drying the sample followed by separation into a plurality of analysis fractions based on particle size and/or specific gravity, and, determining the relative content of each separated analysis fraction in relation to the total content of the sample tested as is described in details in EP3792027A1 to the same applicant. This pre-analysis will, as is described therein, form basis for the most efficient subsequent large-scale infill separation process.

In addition to the items for obtaining infill samples it may be desirable to obtain samples of the turf as well. Thus, the kit may further comprise a knife and a container for the turf. This will allow a recycling facility to analyze the composition and quality of the backing and fiber polymer of the turf beforehand thus allowing for preparation for optimizing the separation process further.

When samples of the turf are to be obtained, suitably the instruction insert further comprises at least one further position outside the playing area of the field for obtaining turf samples. Preferably said position is behind the goal or a corner of the turf field. One sample is sufficient, but it may be desirable to obtain two or more samples in order to have control samples at hand.

The kit according to the invention is usable in the method of the invention for non-destructive sampling. The kit may be nicely packed in a suitcase as illustrated herein, but the precise design and look of such package is not to be understood in a limiting way. It is the presence of the tools necessary, or preferable, for obtaining samples according to the method which is relevant.

### Brief Description of Drawings

In the following description embodiments of the invention will be described with reference to the drawings, in which
Figure 1 is an illustration of a football field indicating the nomenclature used for the respective areas of the field.
Figures 2a and b are illustrations of a half football field in which three predetermined positions according to preferred embodiments are shown.
Figure 3 is an illustration of an embodiment of a kit according to the invention comprising a suitcase, this figure shows the exterior.
Figure 4 is an illustration of a kit according to the invention comprising a suitcase, this figure shows the interior.

### Detailed description

According to the invention a football field is to be understood as being in accordance with standards set out by FIFA and UEFA and similar official bodies and are as such known to a skilled person. According to the stipulations from FIFA a football field should have specific minimum and maximum dimensions: The length (touch line) has to be minimum 90 metres (100 yds) and maximum 120 metres (130 yds). The width (goal line) has to be minimum 45 metres (50 yds) and maximum 90 metres (100 yds). For international matches the rules are somewhat stricter: The length has to be minimum 100 metres and maximum 110 metres. The width has to be minimum 64 metres and maximum 75 metres. A very common field dimension among the top clubs in the world is 105 x 68 metres (114.8 x 74.4 yds) since this is a recommendation from UEFA.

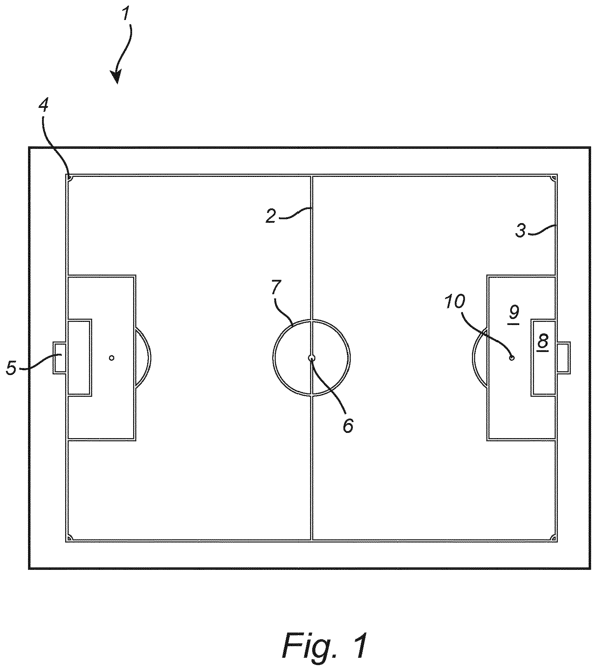

Referring now to figure 1, the football field 1, thus has i.a. a halfway line, 2, a back line 3, a centre spot 6, a centre circle 7, a goal area 8, a penalty area 9, a penalty spot 10 and a goal 5 in each end of the field, and four corners, 4.

The football field is symmetric and thus has a longitudinal center line touching the centre spot 6, and the penalty spot 10 in each end of the field. As used herein the longitudinal centre line is thus understood as that line.

The left and right corners 4 are defined as the marked corner positions of the field when viewed from the half-way line, 2. Hence, any *left* corner is understood to be left of the goal, 5, when facing the goal, but *right* when having the back against the goal. And vice versa when referring to the remaining corners.

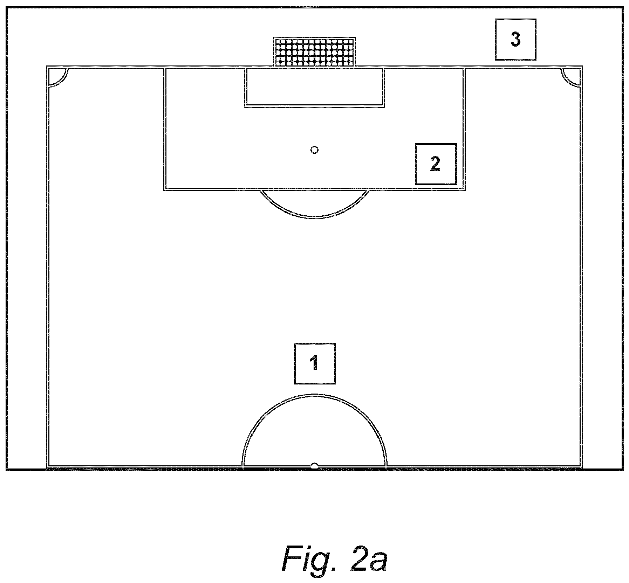

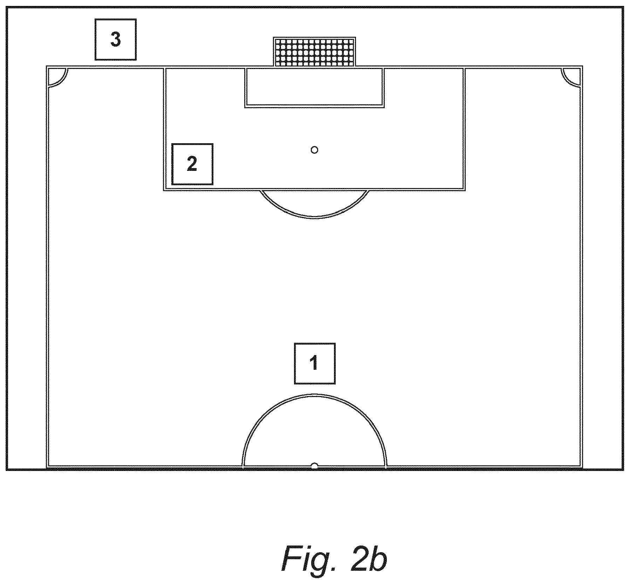

The exterior side of the back line, 3, of the field in the right or left side of the goal, 5, in a position that is between the corner, 4, and the penalty area 9, is to be understood as a position immediately outside the field in the longitudinal direction, and is in figure 2 denoted with a 3 in a square.

The centre spot, 6, circle, 7, penalty area, 9, penalty spot, 10, goal, 5, half-way line, 2, etc. when used herein has the normal meaning as used in the field and as illustrated in figure 1.

The method of the invention will now be described in more detail. Reference can be made to figures 2a and b showing embodiments involving the at least three predetermined positions.

A metal plate having a hole as detailed herein is placed at a first position, "1", on an artificial field. The plate is pressed firmly towards the base of the field to prevent infill from outside the square from accessing the area within the hole. The hole is most suitably a square. The plate can have any form and size but it is essential that the plate has a hole and preferably the hole is of a size as detailed herein.

It is practical that the plate is made of a relatively rigid or dense material so that it is possible, by pressing with the hands, to seal, the hole within the plate from the remaining area of the field thus ensuring that only infill within the hole is vacuumed and added to the designated container. As such the plate can be made of metal, plastic, composite or like materials.

All the infill within the hole is then vacuumed or otherwise removed from the field. In practice using a handheld battery driven vacuum cleaner with a detachable receiving means, is suitable, such as but not limited to devices produced by DeWalt. It is important that all infill has been vacuumed out of the area within the hole of the plate. It should be possible to see the base of the field (i.e. the backing) without any infill, such as without any sand, rubber or other polymer infill material in between the fibers. The detachable receiving means of the vacuum cleaner is then emptied into a container and the position from which it is obtained is marked on the container, to give the most accurate result it is important that all content of the receiving means is emptied into the container. The container for infill is suitably a plastic bag with an opening and closing means but any sealable container may be used.

Samples are taken from at least three predetermined positions in the same manner as described above including adding to separate containers.

In a particular embodiment the at least three predetermined positions are as detailed herein. The order of samples is not important so the denotation "1", "2" and "3" should not be interpreted to have any restriction on the scope. The important feature is that samples are taken from the at least three predetermined positions.

Thus, a first position is at or near the periphery of the centre circle, 7 along the longitudinal central line of the field, this is illustrated as position "1" in figures 2a and b.

A second position is a position in the right or left corner, 4, in the penalty area 9 in the corner facing away from the goal, 5, this is illustrated as position "2" in figures 2a and b.

A third position is a position immediately at or near the exterior side of the back line, 3, of the field in the right or left side of the goal in a position that is in between the corner and the penalty area this is illustrated as position "3" in figures 2a and 2b.

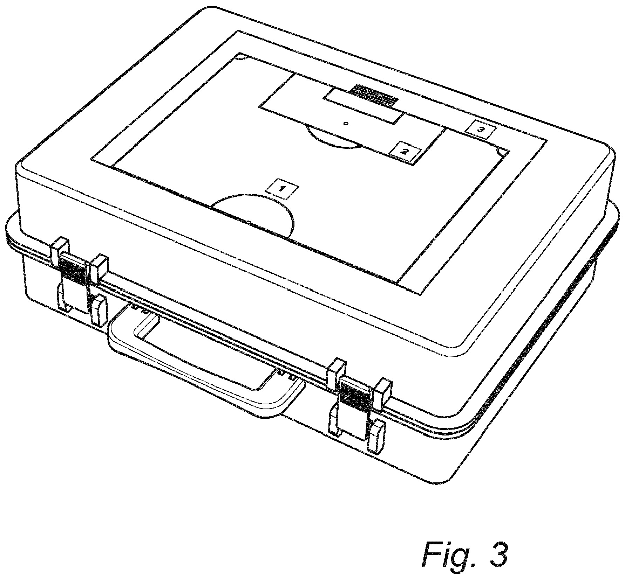

Referring now to Figs 3 to 5, an embodiment of a kit for obtaining samples from an artificial turf on-site will be described.

The kit is generally designated 11 and comprises a vacuum device, here a battery driven portable vacuum cleaner 12 and a plate 13 having a hole 13a. Reference numeral 14 indicates an assembly of sample containers, including at least three sample containers for infill. Finally, an instruction insert 15 for obtaining samples is provided, in the embodiment shown represented on the top of a suitcase 16 accommodating other elements of the kit 11 as shown in Fig. 3. The vacuum cleaner 12 is provided with a vacuum receiving means 12a. The vacuum receiving means 12a is releasably connected to the remaining parts of the vacuum cleaner 12 in order to allow easy emptying of the contents into a respective sample container following completion of the step of vacuuming of infill from the designated positions.

Examples of details of the instruction insert are given in the above, in connection with Figs 2a and 2b, and thus comprise an overview of a field in which at least three positions for obtaining infill samples are marked, wherein the at least three positions are the following: i) a position at or near the periphery of the centre circle along the longitudinal central line of the field, ii) a position in the right or left corner of the penalty area facing a way from the goal and iii) a position immediately at or near the exterior side of the back line of the field in the right or left side of the goal in a position that is in between the corner and the side of the penalty area. The instruction insert may further comprise a further position for obtaining turf samples positioned outside the playing area of the field, such as behind the goal or in a corner of the turf field.

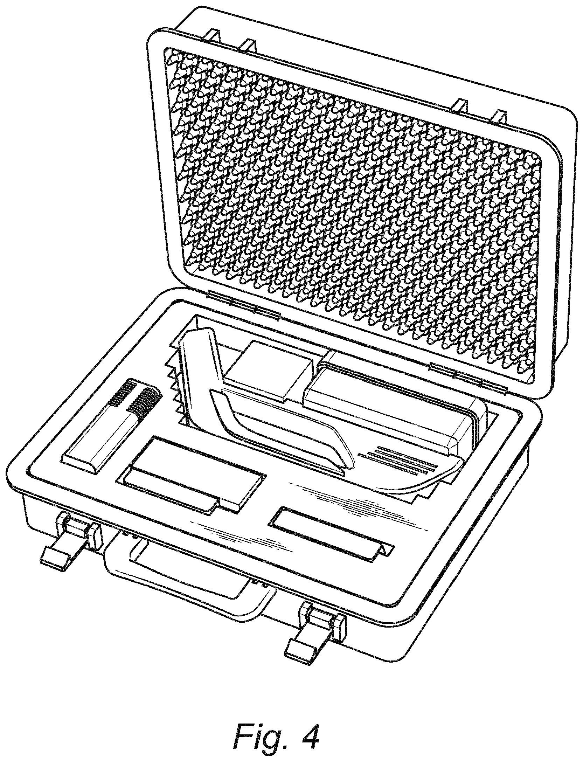

In the open position of the suitcase 16 shown in Fig. 4, the plate 13 has been removed for clarity; a separate view of the plate 13 is given, on a larger scale, in Fig. 5. The squared hole 13a of the plate here has a dimension of approximately 10 by 10 cm.

The kit 11 may comprise further elements facilitating the sampling, including for instance a knife 17 and a container for turf (not shown in detail, but may be accommodated within the assembly 14 of sampling containers. Other elements may be present as well, including a spare battery, a charger, etc.

The suitcase 16 is provided with a foam inlay 16a with suitably formed recesses to accommodate elements of the kit in the bottom part of the suitcase 16, and with a further foam inlay 16b in the top part of the suitcase 16.

Hence, it is also contemplated that destructive samples can be taken from the carpet in order to be able to analyse the nature and quality of the fibers of the carpet before removal from the field. This destructive sample is taken at a position outside the playing area in order to avoid destruction of the field which is still in use. For convenience this position may in variations of the kit be marked on the instruction insert of the kit.

## Claims

1. A method for obtaining samples of infill from an artificial football field, said method comprising the following steps
i) placing a plate with at least one hole at a first position on an artificial football field;
ii) pressing the plate firmly towards the base of the field in order to seal the hole from the remaining part of the turf;
ii) vacuuming infill from the hole to retrieve infill from the area of the sealed position;
iv) emptying the vacuum receiving means, optionally including a filter, into a container and designate the container with the first position;
v) repeat the steps i) to iv) to obtain at least a second and third sample;
wherein the samples are obtained from at least three predetermined positions of the football field.

2. A method according to claim 1, wherein the hole within the plate has a dimension of 10 by 10 cm.

3. A method according to any one of the previous claims wherein the at least three positions are the following:
i) position 1 is a position at or near the periphery of the centre circle (7) along the longitudinal central line of the field,
ii) position 2 is a position in the right or left corner (4) of the penalty area (9) facing away from the goal (5), and
iii) position 3 is a position immediately at or near the exterior side of the back line (3) of the field in the right or left side of the goal (5) in a position that is in between the corner (4) and the penalty area (9).

4. A method according to claim 3, wherein when a sample ii) is taken on the left side, sample iii) is also taken at the left side or wherein when a sample ii) is taken at the right side, sample iii) is also taken at the right side.

5. A method according to any one of the claims 1 to 4, wherein each sample is pre-analysed to determine the size distribution of the components therein.

6. A method according to claim 5, wherein the pre-analysis is performed by the steps of drying the sample followed by separation into a plurality of analysis fractions based on particle size and/or specific gravity, and, determining the relative content of each separated analysis fraction in relation to the total content of the sample tested.

7. A kit for obtaining samples from an artificial turf on-site, said kit comprising
- a vacuum device, preferably a battery driven portable vacuum cleaner;
- a plate having a hole;
- at least three sample containers for infill and
- an instruction insert for obtaining samples.

8. A kit according to claim 7 in which the instruction insert includes an overview of a field in which at least three positions for obtaining infill samples are marked, wherein the at least three positions are the following: i) a position at or near the periphery of the centre circle along the longitudinal central line of the field, ii) a position in the right or left corner of the penalty area facing a way from the goal and iii) a position immediately at or near the exterior side of the back line of the field in the right or left side of the goal in a position that is in between the corner and the side of the penalty area.

9. A kit according to claim 7 or 8, wherein the squared hole of the plate has a dimension of 10 by 10 cm.

10. A kit according to any one of claims 7 to 9 further comprising a knife and a container for turf.

11. A kit according to claim 10 in which the instruction insert further comprises a further position for obtaining turf samples positioned outside the playing area of the field, such as behind the goal or in a corner of the turf field.

12. A kit according to any of the claims 8 to 11, further comprising a suitcase for accommodation of other elements of the kit.

13. A kit according to any of the claims 8 to 12 for use in a method according to any one of claims 1 to 7.
